# EUROPEAN PATENT APPLICATION

(11) **EP 3 945 301 A1**
(43) Date of publication of application: **02.02.2022**
(21) Application number: 21188177.6
(22) Date of filing: 28.07.2021
(51) Int. Cl.: G01M 11/08, G01M 99/00, G01N 17/00, G01N 21/88, G06N 3/08

(54) **TECHNOLOGIES FOR PRODUCING TRAINING DATA FOR IDENTIFYING DEGRADATION OF PHYSICAL COMPONENTS**

(30) Priority: 29.07.2020 US 202016941594
(71) Applicant: ABB Schweiz AG, 5400 Baden (CH)
(72) Inventor: NICHOLAS, Nolan, Granby, 06035 (US); BOCA, Remus, Simsbury, 06070 (US); MOUSAVI, Mirrasoul, Raleigh, 27518 (US); ACHARYA, Mithun, Cary, 27519 (US)
(74) Representative: Aipex B.V.

(57) **Abstract**

Technologies for producing training data for identifying degradation of physical components include a system. The system includes circuitry configured to apply an accelerated degradation process to a physical component of an industrial plant. Additionally, the circuitry of the system is configured to obtain measurement data indicative of visual characteristics of the physical component at each of multiple phases of degradation, wherein the measurement data is usable to train a neural network to identify a phase of degradation of another physical component.

## Description

### BACKGROUND

Parts and equipment ("physical components") used in industrial settings (e.g., food and beverage factories, power equipment facilities, ships, cranes, rail, etc.) change performance characteristics over time due to multiple factors including environmental conditions and operational wear. For example, common conditions that affect metallic objects over time are rust and corrosion. The degradation of physical components can occur over vastly different time frames (e.g., from weeks to decades), depending on the specific environmental conditions and the materials of the physical parts. As such, it is difficult to precisely identify the amount of degradation of a given component in an industrial setting, as data for making such judgements is not readily available. That said, robust identification of the degradation of physical components is important to the efficient operation of an industrial plant as incorrect identification can result in unnecessary replacement of physical components (e.g., physical components that have a significant amount of useful life remaining) and/or failure to take corrective actions (e.g., replacement or repair) for physical components that are likely to become inoperative or less efficient in the near term.

### SUMMARY

In one aspect, the present disclosure provides a system. The system includes circuitry (e.g., components, elements, subsystems, etc.) configured to apply an accelerated degradation process to a physical component of an industrial plant. Additionally, the circuitry of the system is configured to obtain measurement data indicative of visual characteristics of the physical component at each of multiple phases of degradation, wherein the measurement data is usable to train a neural network to identify a phase of degradation of another physical component.

In some embodiments, to apply the accelerated degradation process comprises to apply the accelerated degradation process to the physical component in a degradation chamber configured to produce a target environment within the degradation chamber.

In some embodiments, the circuitry is further configured to determine a degradation model from the measurement data and to produce simulated measurement data using the degradation model, wherein the simulated measurement data is indicative of characteristics of the physical component at multiple phases of degradation and is usable as training data for the neural network.

In some embodiments, the circuitry is further configured to obtain measurement data that is additionally indicative of a performance characteristic of the physical component at each of the multiple phases of degradation.

In some embodiments, to obtain the measurement data comprises to obtain the measurement data with a robot having a sensor configured to produce the measurement data.

In some embodiments, to apply the accelerated degradation process comprises to subject the physical component to vibration, gas, vapor, abrasive conditions, impacts, thermal cycling, thermal shock, liquid spray, liquid soak, humidity, light, radiation, mold, fungus, or an electric arc in a degradation chamber.

In some embodiments, to obtain measurement data indicative of visual characteristics comprises to obtain measurement data indicative of rust, corrosion, discoloration, decomposition, wear, weathering, leaching, crazing, pitting, or cracking.

In some embodiments, the circuitry is further configured to obtain measurement data that is additionally indicative of a performance characteristic of the physical component at each of the multiple phases of degradation by performing at least one of strength testing, cycle fatigue resistance testing, vibration resistance testing, modulus testing, and softening point testing.

In some embodiments, to obtain measurement data comprises to perform destructive measurements on multiple samples of the physical component.

In some embodiments, to apply an accelerated degradation process to a physical component of an industrial plant comprises to apply an accelerated degradation process to a representative subsection of the physical component.

In some embodiments, the circuitry is further configured to determine a degradation model from the measurement data, including performing feature extraction to identify characteristics of corresponding phases of degradation and utilizing a symbolic regression engine to identify correlations in feature development as a function of time and to produce simulated measurement data using the degradation model, wherein the simulated measurement data is indicative of characteristics of the physical component at multiple phases of degradation and is usable as training data for the neural network.

In some embodiments, the circuitry is further to incorporate, with the regression engine, a known equation that describes a degradation process of the physical component.

In some embodiments, the circuitry is further to determine the degradation model for one or more local geometries of the physical component.

In some embodiments, to determine the degradation model for one or more local geometries comprises to determine the degradation model for raised features or inset features.

In some embodiments, the circuitry is further to produce the simulated measurement data with a neural network that has been trained with the measurement data.

In some embodiments, to produce the simulated measurement data with a neural network comprises to produce the simulated measurement data with a generative adversarial network.

In another aspect, the present disclosure provides a method. The method includes applying, by a system for producing training data, an accelerated degradation process to a physical component of an industrial plant. Additionally, the method includes obtaining, by the system, measurement data indicative of visual characteristics of the physical component at each of multiple phases of degradation, wherein the measurement data is usable to train a neural network to identify a phase of degradation of another physical component.

In some embodiments, applying the accelerated degradation process comprises applying the accelerated degradation process to the physical component in a degradation chamber configured to produce a target environment within the degradation chamber.

In some embodiments, the method further comprises the system determining a degradation model from the measurement data and producing simulated measurement data using the degradation model, wherein the simulated measurement data is indicative of characteristics of the physical component at multiple phases of degradation and is usable as training data for the neural network.

In some embodiments, the method further comprises obtaining measurement data that is additionally indicative of a performance characteristic of the physical component at each of the multiple phases of degradation.

In some embodiments, obtaining the measurement data comprises obtaining the measurement data with a robot having a sensor configured to produce the measurement data.

In some embodiments, applying the accelerated degradation process comprises subjecting the physical component to vibration, gas, vapor, abrasive conditions, impacts, thermal cycling, thermal shock, liquid spray, liquid soak, humidity, light, radiation, mold, fungus, or an electric arc in a degradation chamber.

In some embodiments, obtaining measurement data indicative of visual characteristics comprises obtaining measurement data indicative of rust, corrosion, discoloration, decomposition, wear, weathering, leaching, crazing, pitting, or cracking.

In some embodiments, the method further comprises obtaining measurement data that is additionally indicative of a performance characteristic of the physical component at each of the multiple phases of degradation by performing at least one of strength testing, cycle fatigue resistance testing, vibration resistance testing, modulus testing, and softening point testing.

In some embodiments, obtaining measurement data comprises performing destructive measurements on multiple samples of the physical component.

In some embodiments applying an accelerated degradation process to a physical component of an industrial plant comprises applying an accelerated degradation process to a representative subsection of the physical component.

In some embodiments, the method further comprises determining a degradation model from the measurement data, including performing feature extraction to identify characteristics of corresponding phases of degradation and utilizing a symbolic regression engine to identify correlations in feature development as a function of time and producing simulated measurement data using the degradation model, wherein the simulated measurement data is indicative of characteristics of the physical component at multiple phases of degradation and is usable as training data for the neural network.

In some embodiments, the method further comprises incorporating, with the regression engine, a known equation that describes a degradation process of the physical component.

In some embodiments, the method further comprises determining the degradation model for one or more local geometries of the physical component.

In some embodiments, determining the degradation model for one or more local geometries comprises determining the degradation model for raised features or inset features.

In some embodiments, the method further comprises producing the simulated measurement data with a neural network that has been trained with the measurement data.

In some embodiments, producing the simulated measurement data with a neural network comprises producing the simulated measurement data with a generative adversarial network.

In yet another aspect, the present disclosure provides one or more machine-readable storage media having a plurality of instructions stored thereon that, in response to being executed, cause a system to apply an accelerated degradation process to a physical component of an industrial plant. Additionally, the instructions cause the system to obtain measurement data indicative of visual characteristics of the physical component at each of multiple phases of degradation, wherein the measurement data is usable to train a neural network to identify a phase of degradation of another physical component.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements. The detailed description particularly refers to the accompanying figures in which:
FIG. 1 is a simplified block diagram of at least one embodiment of a system for producing training data for identifying degradation of physical components;
FIG. 2 is a simplified block diagram of at least one embodiment of a degradation analysis compute device of the system of FIG. 1; and
FIGS. 3-7 are simplified block diagrams of at least one embodiment of a method for producing training data for identifying degradation of physical components that may be performed by the system of FIG. 1.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

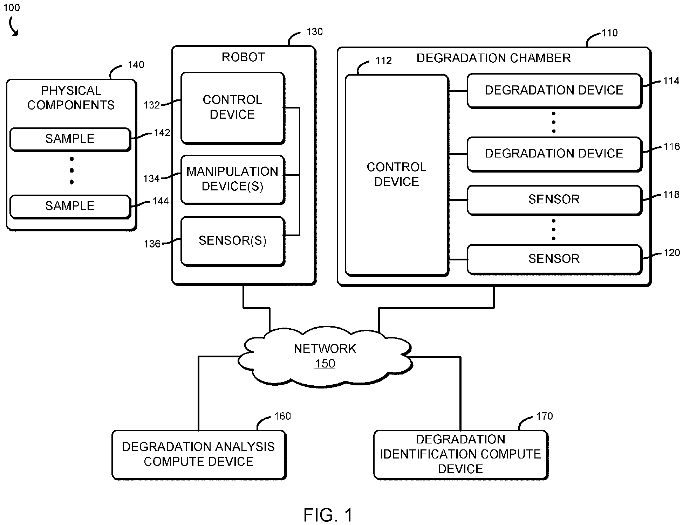

Referring now to FIG. 1, a system 100 for producing training data for identifying degradation of physical components includes, in the illustrative embodiment, a degradation chamber 110, a robot 130, a set of physical components 140, a degradation analysis compute device 160, and a degradation identification compute device 170. In operation, the degradation analysis compute device 160 controls the degradation chamber 110 and the robot 130, causing the robot 130 to place samples 142, 144 (e.g., entire physical components, such as gear boxes, valves, actuators, etc., representative subsections (e.g., "coupons") thereof, etc.) of physical components 140 in the degradation chamber 110 and periodically obtain measurements (e.g., visual characteristics, performance characteristics, etc.) of the degradation of the samples 142, 144 (e.g., by taking measurements within the degradation chamber 110 or by removing, measuring, and reinserting the samples 142, 144 into the degradation chamber 110). The degradation analysis compute device 160 also controls the degradation chamber 110 to create a target environment that accelerates the degradation of the physical components 140 (e.g., the samples 142, 144) so that measurements (e.g., "measurement data") of the degradation at various phases can be taken in a more controlled way than would otherwise be possible. Further, the degradation analysis compute device 160, in the illustrative embodiment, correlates the visual characteristics of the physical components 140 at various phases of degradation with performance characteristics (e.g., strength, etc.) measured using the robot 130 and the degradation chamber 110 described above.

The degradation analysis compute device 160, in some embodiments, may supplement the measurement data with simulated measurement data. That is, in some embodiments, the degradation analysis compute device 160 may determine, from the measurement data (e.g., the measurements obtained from degrading the physical components 140 in the degradation chamber 110), a model that describes the degradation of a physical component over time (e.g., under specified conditions) and producing, with the model, additional measurement data (e.g., visual characteristic data, such as images, etc.) that was not actually measured using the robot 130 and the degradation chamber 110. As such, the system 100 rapidly produces high quality data usable for training machine learning models (e.g., executed by the degradation identification compute device 170) to accurately and precisely determine the phase (e.g., amount) of degradation of a given physical component and facilitate a determination of whether the physical component should be replaced or repaired (e.g., based on its corresponding performance characteristics at the phase of degradation).

Still referring to FIG. 1, the robot 130, in the illustrative embodiment, includes a control device 132, one or more manipulation devices 134, and one or more sensors 136. The control device 132 may be embodied as any device or circuitry (e.g., a microcontroller, a processor, an application specific integrated circuit (ASIC), a field programmable gate array (FPGA), etc.) configured to control the manipulation device(s) 134 and sensor(s) 136 to place the physical components 140 in the degradation chamber 110 to undergo accelerated degradation, remove the physical components 140 from the degradation chamber 110, and measure characteristics of the physical components 140 at various phases of degradation. Each manipulation device 124 may be embodied as any device and/or circuitry (e.g., an electromechanical claw) capable of grasping a physical component 140 at a predefined location, and rotating, translating, and otherwise manipulating the physical component 140. Each sensor 136 may be embodied as any device and/or circuitry (e.g., an electromagnetic radiation (e.g., visible light, infrared light, ultraviolet light, X-ray) emitter, an acoustic wave emitter, an imaging device (e.g., a camera), a strain gauge, a durometer, etc.). capable of measuring one or more characteristics of a physical component 140.

The degradation chamber 110, in the illustrative embodiment, includes a control device 112, degradation devices 114, 116, and sensors 118, 120. While two degradation devices 114, 116 and two sensors 118, 120 are shown in FIG. 1, the number of degradation devices and sensors may vary across different embodiments. The control device 112 may be embodied as any device or circuitry (e.g., a microcontroller, a processor, an ASIC, an FPGA, etc.) configured to control the degradation devices 114, 116 to produce conditions that cause accelerated degradation of one or more physical components 140 in the degradation chamber 110 and to control the sensors 118, 120 to take measurements of the conditions in the degradation chamber 110 (e.g., as feedback to the degradation device(s) 114, 116) and/or measurements of characteristics of the physical component(s) 140 in the degradation chamber 110. Each degradation device 114, 116 may be embodied as any device and/or circuitry (e.g., a liquid or gas emitter, a heating or cooling device, a radiation emitter (e.g., a light, a laser, an X-ray emitter, etc.), a vibration or impact producing device, etc.) capable of producing a target (e.g., defined) environment within the degradation chamber 110. Each sensor 118, 120 may be embodied as any device or circuitry (e.g., similar to the sensors 136) capable of taking measurements of the conditions in the degradation chamber 110 (e.g., as feedback to the degradation device(s) 114, 116) and/or measurements of characteristics of the physical component(s) 140 in the degradation chamber 110.

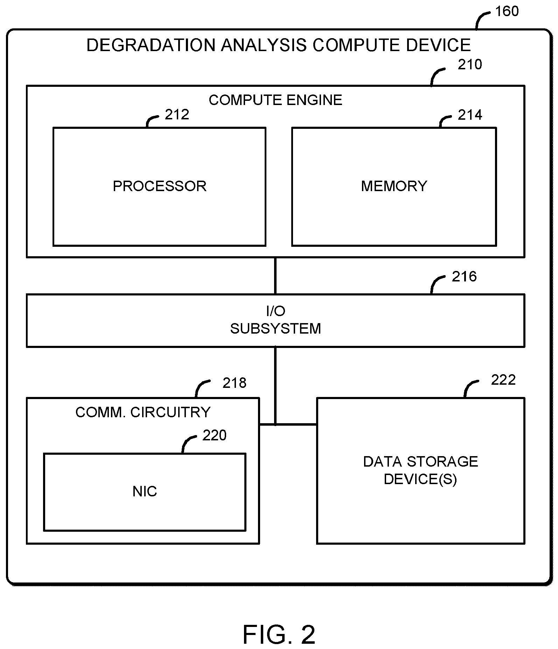

Referring now to FIG. 2, the illustrative degradation analysis compute device 160 includes a compute engine 210, an input/output (I/O) subsystem 216, communication circuitry 218, and a data storage subsystem 222. Of course, in other embodiments, the degradation analysis compute device 160 may include other or additional components, such as those commonly found in a computer (e.g., a display, etc.). Additionally, in some embodiments, one or more of the illustrative components may be incorporated in, or otherwise form a portion of, another component.

The compute engine 210 may be embodied as any type of device or collection of devices capable of performing various compute functions described below. In some embodiments, the compute engine 210 may be embodied as a single device such as an integrated circuit, an embedded system, a field-programmable gate array (FPGA), a system-on-a-chip (SOC), or other integrated system or device. Additionally, in some embodiments, the compute engine 210 includes or is embodied as a processor 212 and a memory 214. The processor 212 may be embodied as any type of processor capable of performing the functions described herein. For example, the processor 212 may be embodied as a microcontroller, a single or multi-core processor(s), or other processor or processing/controlling circuit. In some embodiments, the processor 212 may be embodied as, include, or be coupled to an FPGA, an application specific integrated circuit (ASIC), reconfigurable hardware or hardware circuitry, or other specialized hardware to facilitate performance of the functions described herein.

The main memory 214 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. In some embodiments, all or a portion of the main memory 214 may be integrated into the processor 212. In operation, the main memory 214 may store various software and data used during operation such as parameters for simulating a target environment to accelerate the degradation of physical components 140, parameters for measuring characteristics of the physical components 140 at various phases of degradation, measurements obtained at various phases of degradation of the physical components 140, models that describe the degradation of physical components, applications, programs, libraries, and drivers.

The compute engine 210 is communicatively coupled to other components of the degradation analysis compute device 160 via the I/O subsystem 216, which may be embodied as circuitry and/or components to facilitate input/output operations with the compute engine 210 (e.g., with the processor 212 and the main memory 214) and other components of the degradation analysis compute device 160. For example, the I/O subsystem 216 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 216 may form a portion of a system-on-a-chip (SoC) and be incorporated, along with one or more of the processor 212, the main memory 214, and other components of the degradation analysis compute device 160, into the compute engine 210.

The communication circuitry 218 may be embodied as any communication circuit, device, or collection thereof, capable of enabling communications over a network 150 between the degradation analysis compute device 160 and another device (e.g., the robot 130, the degradation chamber 110, the degradation identification compute device 170, etc.). The communication circuitry 218 may be configured to use any one or more communication technology (e.g., wired or wireless communications) and associated protocols (e.g., Ethernet, Bluetooth^{®}, Wi-Fi^{®}, WiMAX, etc.) to effect such communication.

The illustrative communication circuitry 218 includes a network interface controller (NIC) 220. The NIC 220 may be embodied as one or more add-in-boards, daughter cards, network interface cards, controller chips, chipsets, or other devices that may be used by the degradation analysis compute device 160 to connect with another compute device (e.g., the robot 130, the degradation chamber 110, the degradation identification compute device 170, etc.). In some embodiments, the NIC 220 may be embodied as part of a system-on-a-chip (SoC) that includes one or more processors, or included on a multichip package that also contains one or more processors. In some embodiments, the NIC 220 may include a local processor (not shown) and/or a local memory (not shown) that are both local to the NIC 220. In such embodiments, the local processor of the NIC 220 may be capable of performing one or more of the functions of the compute engine 210 described herein. Additionally or alternatively, in such embodiments, the local memory of the NIC 220 may be integrated into one or more components of the degradation analysis compute device 160 at the board level, socket level, chip level, and/or other levels.

Each data storage device 222, may be embodied as any type of device configured for short-term or long-term storage of data such as, for example, memory devices and circuits, memory cards, hard disk drives, solid-state drives, or other data storage device. Each data storage device 222 may include a system partition that stores data and firmware code for the data storage device 222 and one or more operating system partitions that store data files and executables for operating systems. Though shown as a single unit, it should be understood that in some embodiments, the components of the degradation analysis compute device 160 may be disaggregated (e.g., located in different racks, different portions of a data center, etc.).

The robot 130, the degradation chamber 110, and the degradation identification compute device 170 may have components similar to those described in FIG. 2 with reference to the degradation analysis compute device 160. The description of those components of the degradation analysis compute device 160 is equally applicable to the description of components of the robot 130, the degradation chamber 110, and the degradation identification compute device 170. Further, it should be appreciated that any of the devices 110, 130, 160, an 170 may include other components, sub-components, and devices commonly found in a computing device (e.g., a display device), which are not discussed above in reference to the degradation analysis compute device 160 and not discussed herein for clarity of the description. Furthermore, in some embodiments, the degradation analysis compute device 160 and the degradation identification compute device 170 may be combined into a single unit.

In the illustrative embodiment, the devices 110, 130, 160, and 170 are in communication via a network 150, which may be embodied as any type of wired or wireless communication network, including global networks (e.g., the internet), local area networks (LANs) or wide area networks (WANs), cellular networks (e.g., Global System for Mobile Communications (GSM), 3G, Long Term Evolution (LTE), Worldwide Interoperability for Microwave Access (WiMAX), etc.), a radio area network (RAN), digital subscriber line (DSL) networks, cable networks (e.g., coaxial networks, fiber networks, etc.), or any combination thereof.

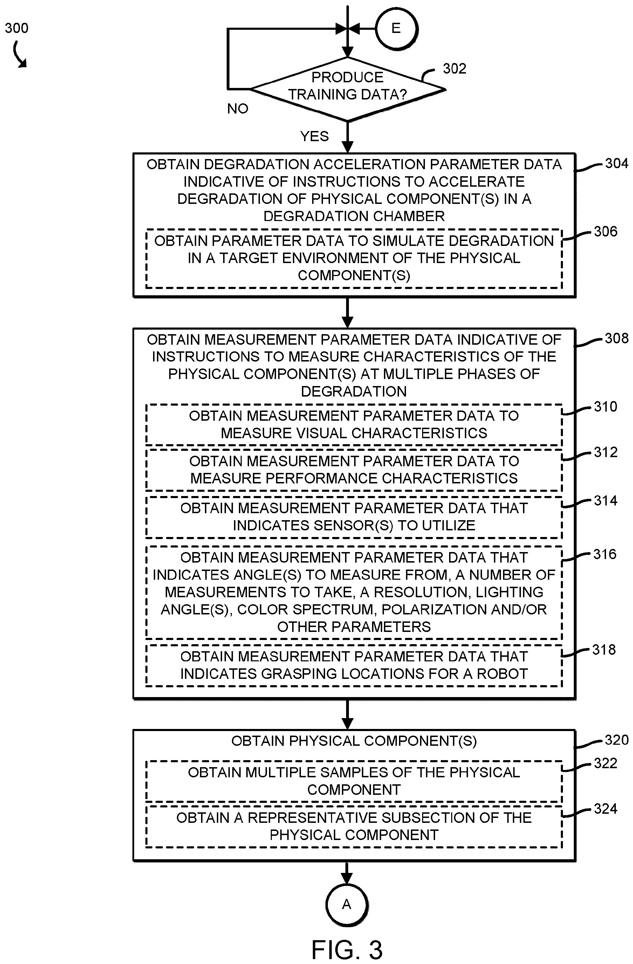

Referring now to FIG. 3, the system 100, in the illustrative embodiment, may perform a method 300 for producing training data for identifying degradation of physical components. The method 300 begins with block 302, in which the system 100 determines whether to produce training data. In the illustrative embodiment, the system 100 may produce training data in response to a request (e.g., from a user of the degradation analysis compute device 160) to produce training data, in response to a determination (e.g., by the robot 130) that physical components 140 are available to be degraded in the degradation chamber 110, and/or based on other factors. Regardless, in response to a determination to produce training data, the method 300 advances to block 304, in which the system 100 obtains (e.g., from a configuration file in the data storage 222 of the degradation analysis compute device 160, from a request received from another compute device, or another source) degradation acceleration parameter data indicative of instructions to accelerate the degradation of physical component(s) (e.g., the physical components 140) in a degradation chamber (e.g., the degradation chamber 110). In doing so, the system 100 may obtain parameter data to simulate degradation in a target environment of the physical component(s) 140, as indicated in block 306. For example, if the physical components 140 are metal components to be used in a marine environment (e.g., as part of a ship or an oil rig) the target environment may include moisture and salt. As another example, if the physical components 140 include polymers and are intended to be used in an outdoor area, the target environment may include light of various frequencies (e.g., ultraviolet, infrared, visible light) and thermal cycling. As yet another example, if the physical components 140 are to be used in a chemical processing plant, the target environment may include bleach or other chemicals known to be present in the plant.

In block 308, the system 100 obtains (e.g., from a configuration file in the data storage 222 of the degradation analysis compute device 160, from a request received from another compute device, or another source) measurement parameter data indicative of instructions to measure characteristics of the physical components 140 at multiple phases of degradation. In doing so, and as indicated in block 310, the system 100 may obtain measurement parameter data to measure visual characteristics of the physical components 140 at different phases of degradation. Additionally, the system 100 may obtain measurement parameter data to measure performance characteristics (e.g., strength testing, cycle fatigue resistance, etc.) of the physical components 140 at different phases of degradation, as indicated in block 312. In block 314, the system 100 may obtain measurement parameter data that indicates the sensor(s) 136, 118, 120 to utilize to make the measurements. As indicated in block 316, the system 100 may obtain measurement parameter data that indicates one or more angles to measure from, a number of measurements to take, a resolution, light angle(s), a color spectrum to image in, light polarization, and/or other parameters defining how the measurements are to be taken. The system 100 may also obtain measurement parameter data that indicates one or more grasping locations (e.g., location(s) on a physical component 140 that are to be held by the robot 130), as indicated in block 318. In some embodiments, the system 100 may obtain a computer aided design (CAD) file of the physical component(s) that provides data indicative of the grasping locations.

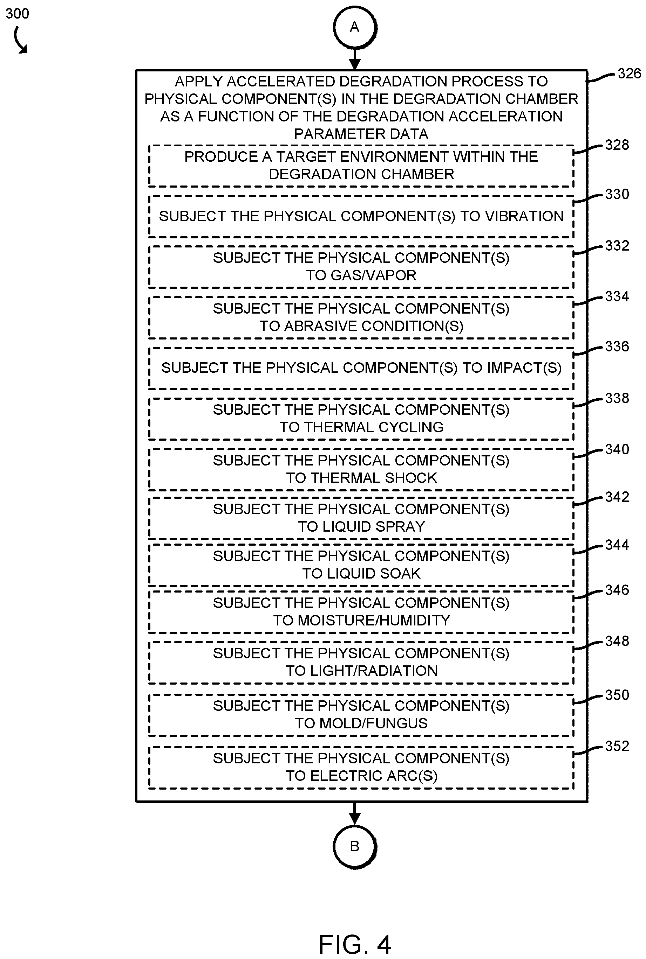

As indicated in block 320, the system 100 obtains physical component(s) 140 (e.g., by placing one or more of the physical components 140 into the degradation chamber 110 with the robot 130). In doing so, and as indicated in block 322, the system may obtain multiple samples 142, 144 of the same type of physical component (e.g., multiple gearboxes of the same design). As indicated in block 324, rather than obtaining an entire physical component, the system 100 may obtain a representative subsection (e.g., a "coupon" of the material in the physical component that has the material to be degraded and measured). Subsequently, the method 300 advances to block 326 of FIG. 4, in which the system 100 applies an accelerated degradation process to physical component(s) 140 (e.g., one or more of the samples 142, 144) in the degradation chamber 110 as a function of the degradation acceleration parameter data (e.g., based on the degradation acceleration parameter data from block 304).

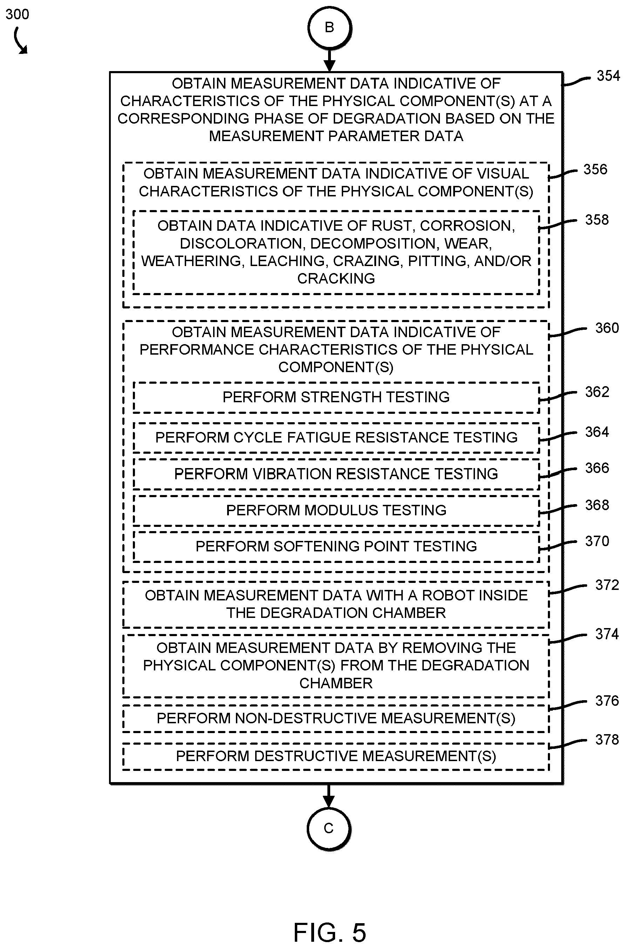

Referring now to FIG. 4, in applying the accelerated degradation process, the system 100, in the illustrative embodiment, produces a target environment (e.g., defined by the degradation acceleration parameter data) within the degradation chamber 110 (e.g., using one or more of the degradation devices 114, 116), as indicated in block 328. As indicated in block 330, the system 100 (e.g., the degradation chamber 110) may subject the physical component(s) 140 to vibration or acoustic waves. Additionally or alternatively, and as indicated in block 332, the system (e.g., the degradation chamber 110) may subject the physical component(s) 140 to gas or vapor (e.g., volatile organic compounds (VOCs), ozone, chlorine, etc.). As indicated in block 334, the system 100 (e.g., the degradation chamber 110) may subject the physical component(s) 140 to abrasive conditions, such as sandblasting. The system 100 may additionally or alternatively subject the physical component(s) 140 to impacts, such as simulated hail, as indicated in block 336. As indicated in blocks 338 and 340, the system 100 (e.g., the degradation chamber 110) may subject the physical component(s) 140 to thermal cycling (e.g., temperature swings) or thermal shock (e.g., ultra-fast thermal cycling). The system 100 may, in some embodiments, subject the physical component(s) 140 to liquid spray (e.g., water, brine, solvent(s), cleaners, various pH, etc.), as indicated in block 342. As indicated in block 344, the system 100 may subject the physical component(s) 140 to liquid soak (e.g., water, brine, solvent(s), cleaners, various pH, etc.). The system 100 may, in some embodiments, subject the physical component(s) 140 to moisture or humidity (e.g., both high and low humidity), as indicated in block 346. As indicated in block 348, the system 100 may subject the physical component(s) 140 to light or other radiation (e.g., visible light, ultraviolet light, infrared light, X-ray radiation, etc.). Additionally or alternatively, the system 100 may subject the physical component(s) 140 to mold or other fungus, as indicated in block 350. As indicated in block 352, the system 100 may subject the physical components to electric arc(s). Subsequently, the method 300 advances to block 354 of FIG. 5, in which the system 100 (e.g., the robot 130 and/or the sensor(s) 118, 120 of the degradation chamber 110) obtains measurement data indicative of characteristics of the physical component(s) at a corresponding phase of degradation, based on (e.g., using instructions defined by) the measurement parameter data.

Referring now to FIG. 5, the system 100, in the illustrative embodiment, obtains measurement data indicative of visual characteristics of the physical component(s) 140 at a given phase of degradation, as indicated in block 356. In doing so, and as indicated at block 358, the system 100 may obtain data indicative of rust, corrosion, discoloration, decomposition, wear, weathering, leaching, crazing, pitting, and/or cracking. In the illustrative embodiment, the system 100 additionally obtains measurement data that is indicative of one or more performance characteristics of the physical component(s) 140 at the corresponding phase of degradation, as indicated in block 360. In doing so, and as indicated in block 362, the system 100 may perform strength testing (e.g., a measurement of resistance to bending or breaking) of the physical component(s) 140 (e.g., of rusted metal physical component(s)). As indicated in block 364, the system 100 may perform cycle fatigue resistance testing of the physical component(s) 140 (e.g., of photo-aged polymers). The system 100 may, in some embodiments, perform vibration resistance testing of the physical component(s) 140 (e.g., of chemically-leached ceramic components), as indicated in block 366. In some embodiments, the system 100 may perform modulus testing of the physical component(s) 140 (e.g., of thermal shocked metals), as indicated in block 368. As indicated in block 370, the system 100 may perform softening point testing of the physical component(s) 140 (e.g., of chemical vapor degraded polymers).

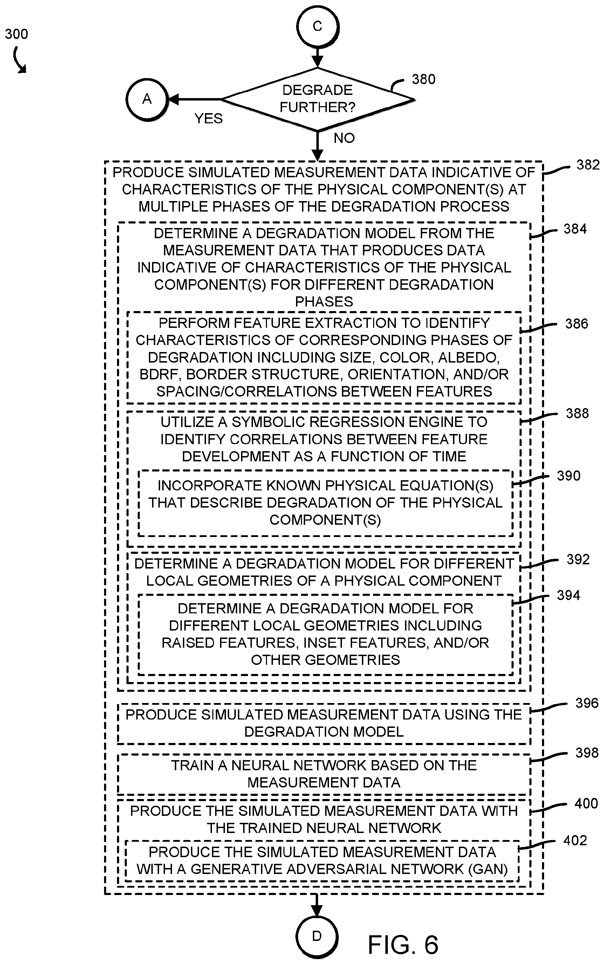

In obtaining the measurements, the system 100 may obtain the measurement data with a robot (e.g., the robot 130) physically located inside the degradation chamber 110. That is, the robot 130 may enter the degradation chamber 110 to obtain the measurements of the characteristics (e.g., by grasping the physical component(s) 140, rotating them, and measuring their characteristics from different angles), as indicated in block 372. In other embodiments, and as indicated in block 374, the system 100 may obtain the measurement data by removing (e.g., with the robot 130) the physical component(s) 140 from the degradation chamber (e.g., after a defined amount of the degradation process has occurred), obtaining the measurements (e.g., from multiple angles), and potentially reinserting one or more of the physical components 140 back into the degradation chamber 110 for additional degradation. In obtaining the measurement data, the system 100 may perform non-destructive measurements (e.g., imaging the physical component(s) from different angles), as indicated in block 376. Further, the system 100 may perform destructive measurements (e.g., in measuring the performance characteristics of the physical component(s) 140), as indicated in block 378. That is, the system 100 may destroy samples of the physical component(s) 140 during the measurement process. As such, in the illustrative embodiment, the system 100 may initially begin the degradation and measurement process with multiple samples (e.g., copies) of a physical component 140 to compensate for the gradual loss of samples (e.g., due to destructive measurements) during the degradation and measuring process. Subsequently, the method 300 advances to block 380 of FIG. 6, in which the system 100 determines whether to perform further degradation.

Referring now to FIG. 6, in block 380, the system 100 may determine to perform further degradation in response to a determination that the degradation acceleration parameter data indicates a target phase of degradation to reach and that the present phase of degradation does not satisfy the target phase. If the system 100 determines to perform further degradation, the method 300 loops back to block 326 of FIG. 4, to continue to apply the accelerated degradation process to the physical component(s). Otherwise, the method 300, in the illustrative embodiment, advances to block 382 in which the system 100 produces simulated measurement data indicative of characteristics of the physical component(s) 140 at multiple phases of the degradation process. That is, the system 100 (e.g., the degradation analysis compute device 160) produces data indicative of measurements (e.g., images, etc.) that were not physically performed (e.g., using the degradation chamber 110 and the robot 130), to augment the measurement data from the degradation chamber 110 and the robot 130. In doing so, and as indicated in block 384, the system 100 (e.g., the degradation analysis compute device 160) may determine a degradation model from the measurement data (e.g., obtained from the robot 130 and/or degradation chamber 110) that produces data indicative of characteristics of the physical component(s) 140 for different degradation phases. In doing so, and as indicated in block 386, the system 100 (e.g., the degradation analysis compute device 160) may perform feature extraction (e.g., edge detection, object recognition, etc.) to identify characteristics of corresponding phases of degradation. For example, the system 100 (e.g., the degradation analysis compute device 160) may identify distinctive characteristics such as size, color, albedo, a bidirectional reflectance distribution function (BDRF), border structure, orientation, and/or spacing or correlations between features of the physical component(s) 140 for each degradation phase, based on an analysis of the measurement data. The system 100 may associate the extracted features with testing conditions (e.g., the measurement parameter data from block 308 defining angles to measure from, lighting conditions, etc.) under which the measurements (e.g., the measurement data) were obtained.

As indicated in block 388, the system 100 (e.g., the degradation analysis compute device 160) may utilize a symbolic regression engine to identify correlations in the development (e.g., growth, nucleation, etc.) of the features (e.g., features extracted in block 386) as a function of time (e.g., throughout the progress of degradation process). Furthermore, in some embodiments, the system 100 (e.g., the degradation analysis compute device 160) may incorporate, into the symbolic regression engine, one or more known (e.g., previously defined) equations that describe a degradation process (e.g., an equation that describes the changes in the features due to rusting), as indicated in block 390. As indicated in block 392, in some embodiments, the system 100 (e.g., the degradation analysis compute device 160) may determine a degradation model for different local geometries of a physical component 140. For example, and as indicated in block 394, the degradation analysis compute device 160 may determine a degradation model for different local geometries including raised features or inset features of a physical component 140, as those local geometries may alter the changes in features that would otherwise occur on a flat surface of the physical component 140. As indicated in block 396, the system 100 (e.g., the degradation analysis compute device 160) produces simulated measurement data using the degradation model that was determined in block 384 (e.g., additional measurements for phases that are represented in the measurement data from the robot 130 and the degradation chamber 110, measurement data for phases that were not actually measured using the robot 130 and the degradation chamber 110, etc.).

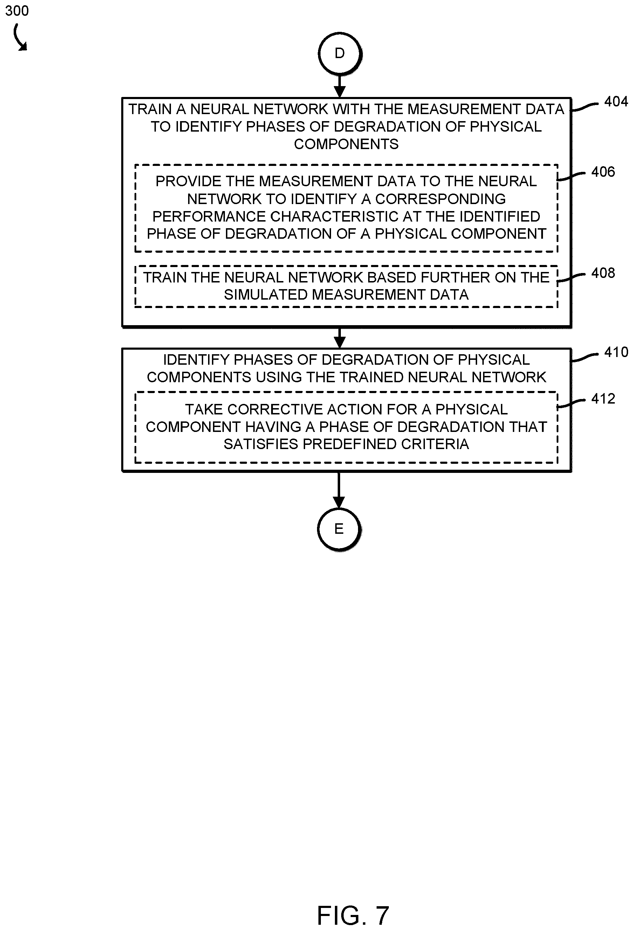

In some embodiments, the system 100 may train a neural network using the measurement data (e.g. from the robot 130 and the degradation chamber 110) and produce the simulated measurement data with the trained neural network, as indicated in blocks 398 and 400. In some embodiments, the system 100 (e.g., the degradation analysis compute device 160) may produce the simulated measurement data (e.g., including ray traced images of various phases of degradation) with one or more generative adversarial networks (GANs), as indicated in block 402. Subsequently, the method 300, in the illustrative embodiment, advances to block 404 of FIG. 7, in which the system 100 (e.g., the degradation analysis compute device 160) trains a neural network with the measurement data to identify phases of degradation of physical components (e.g., iteratively adjusting weights in a neural network to accurately predict an already-known degradation phase based on the corresponding characteristics represented in the measurement data).

Referring now to FIG. 7, in training the neural network, the system 100 (e.g., the degradation analysis compute device 160) may provide measurement data to the neural network to enable the neural network to identify a corresponding performance characteristic (e.g., strength) at an identified (e.g., by the neural network) phase of degradation of a physical component, as indicated in block 406. That is, the system 100 trains the neural network based on measurement data indicative of the performance characteristics in addition to the visual characteristics for each phase of degradation. As indicated in block 408, to improve the accuracy and precision of the neural network, the system 100 may additionally train the neural network using the simulated measurement data (e.g., thereby providing a larger training data set) from block 382 of FIG. 6.

Subsequently, the system 100 (e.g., the degradation identification compute device 170, utilizing the trained neural network produced by the degradation analysis compute device in block 404) identifies phases of degradation of physical components (e.g., in an industrial setting) using the trained neural network, as indicated in block 410. Furthermore, a user of the system 100 (e.g., of the degradation identification compute device 170) may take corrective action (e.g., replacement or repair) for a physical component having a phase of degradation that satisfies predefined criteria (e.g., is at or beyond a predefined phase of degradation, has a performance characteristic, such as a strength, that is less than a predefined threshold, etc.), as indicated in block 412. The method 300 may, in some embodiments, loop back to block 302 of FIG. 3 to potentially produce additional training data (e.g., based on other physical components). While the operations of the method 300 have been illustrated as being performed in a particular sequence, it should be understood that the operations could be performed in a different sequence or concurrently (e.g., applying the accelerated degradation process to physical components while concurrently obtaining degradation acceleration parameter data and measurement parameter data for use with other physical components).

While certain illustrative embodiments have been described in detail in the drawings and the foregoing description, such an illustration and description is to be considered as exemplary and not restrictive in character, it being understood that only illustrative embodiments have been shown and described and that all changes and modifications that come within the spirit of the disclosure are desired to be protected. There exist a plurality of advantages of the present disclosure arising from the various features of the apparatus, systems, and methods described herein. It will be noted that alternative embodiments of the apparatus, systems, and methods of the present disclosure may not include all of the features described, yet still benefit from at least some of the advantages of such features. Those of ordinary skill in the art may readily devise their own implementations of the apparatus, systems, and methods that incorporate one or more of the features of the present disclosure.

## Claims

1. A system comprising:
circuitry configured to:
apply an accelerated degradation process to a physical component of an industrial plant; and
obtain measurement data indicative of visual characteristics of the physical component at each of multiple phases of degradation, wherein the measurement data is usable to train a neural network to identify a phase of degradation of another physical component.

2. The system of claim 1, wherein to apply the accelerated degradation process comprises to apply the accelerated degradation process to the physical component in a degradation chamber configured to produce a target environment within the degradation chamber.

3. The system of claim 2, wherein to apply the accelerated degradation process comprises to subject the physical component to vibration, gas, vapor, abrasive conditions, impacts, thermal cycling, thermal shock, liquid spray, liquid soak, humidity, light, radiation, mold, fungus, or an electric arc in a degradation chamber.

4. The system of any preceding claim, wherein to obtain the measurement data comprises to obtain the measurement data with a robot having a sensor configured to produce the measurement data.

5. The system of any preceding claim, wherein to obtain measurement data indicative of visual characteristics comprises to obtain measurement data indicative of rust, corrosion, discoloration, decomposition, wear, weathering, leaching, crazing, pitting, or cracking.

6. The system of any preceding claim, wherein the circuitry is further configured to obtain measurement data that is additionally indicative of a performance characteristic of the physical component at each of the multiple phases of degradation by performing at least one of strength testing, cycle fatigue resistance testing, vibration resistance testing, modulus testing, and softening point testing.

7. The system of any preceding claim, wherein to obtain measurement data comprises to perform destructive measurements on multiple samples of the physical component.

8. The system of any preceding claim, wherein to apply an accelerated degradation process to a physical component of an industrial plant comprises to apply an accelerated degradation process to a representative subsection of the physical component.

9. The system of any preceding claim, wherein the circuitry is further configured to:
determine a degradation model from the measurement data, including performing feature extraction to identify characteristics of corresponding phases of degradation and utilizing a symbolic regression engine to identify correlations in feature development as a function of time; and
produce simulated measurement data using the degradation model, wherein the simulated measurement data is indicative of characteristics of the physical component at multiple phases of degradation and is usable as training data for the neural network.

10. The system of claim 9, wherein the circuitry is further to incorporate, with the regression engine, a known equation that describes a degradation process of the physical component.

11. The system of claim 9, wherein the circuitry is further to determine the degradation model for one or more local geometries of the physical component.

12. The system of claim 11, wherein to determine the degradation model for one or more local geometries comprises to determine the degradation model for raised features or inset features.

13. The system of any preceding claim, wherein the circuitry is further to produce the simulated measurement data with a neural network that has been trained with the measurement data.

14. The system of any preceding claim, wherein to produce the simulated measurement data with a neural network comprises to produce the simulated measurement data with a generative adversarial network.

15. A method comprising:
applying, by a system for producing training data, an accelerated degradation process to a physical component of an industrial plant; and
obtaining, by the system, measurement data indicative of visual characteristics of the physical component at each of multiple phases of degradation, wherein the measurement data is usable to train a neural network to identify a phase of degradation of another physical component.
